# EUROPÄISCHE PATENTSCHRIFT

(11) **EP 1 707 060 B1**
(45) Veröffentlichungstag und Bekanntmachung des Hinweises auf die Patenterteilung: **02.07.2008**
(21) Anmeldenummer: 06003662.1
(22) Anmeldetag: 23.02.2006
(51) Int. Cl.: A23L 1/00, A23L 1/164, A23L 1/212, A23L 1/36, A23G 3/48, A23G 3/54, A23C 9/13

(54) **Verfahren zum Verhindern des Übertritts von Wasser zwischen Nahrungsmittel-Komponenten**
Process for avoiding water migration between food components
Procédé pour empêcher la migration d'eau entre des ingrédients alimentaires

(30) Priorität: 31.03.2005 DE 102005015131
(43) Veröffentlichungstag der Anmeldung: 04.10.2006
(73) Patentinhaber: Franz Zentis GmbH & Co. KG, 52070 Aachen (DE)
(72) Erfinder: Baumer, Johannes, 4710 Lontzen (BE); Becker, Jürgen, Dr., 52477 Alsdorf (DE); Heisterüber, Dominik, Dr., 52249 Eschweiler (DE); Otte, Dietmar, Dipl.-Ing., 52076 Aachen (DE)
(74) Vertreter: Bauer, Dirk

(56) Entgegenhaltungen:
- EP-A- 0 561 513
- DE-A1- 4 017 114
- GB-A- 2 031 260
- US-A1- 2002 090 421
- US-A1- 2003 148 007

## Beschreibung

Die Erfindung betrifft ein Verfahren zum Verhindern des Übertritts von Wasser aus einem wasserhaltigen Lebensmittel in ein Partikel, wobei das Partikel vor dem Einbringen in das Lebensmittel vollständig mit Fett beschichtet ist. Des Weiteren betrifft die Erfindung ein Partikel zum gemeinsamen Verzehr mit einem wasserhaltigen Lebensmittel und ferner eine Fruchtzubereitung zum gemeinsamen Verzehr mit einem Molkereiprodukt.

Die Aufgabe, Partikel unterschiedlichster Art in wasserhaltige Lebensmittel einzubringen, stellt regelmäßig hohe Anforderungen an Lebensmittelchemie und -technik. Der Verwendung beispielsweise von Partikeln, die eine poröse Struktur aufweisen und nach Art eines Schwamms Wasser aufnehmen mit wasserhaltigen Zubereitungen sind enge Grenzen gesetzt. Getreidebasierte Partikel in Form ganzer gequetschter Getreidekörner - beispielsweise so genannte "Haferflocken", gepuffte Getreidekörner wie "Puffreis", grob geschrotetes Getreide und Getreidemehlzubereitungen beispielsweise in gerösteter Form als so genannte "Cornflakes" und andere extrudierte Produkte quellen bei Kontakt mit wasserhaltigen Medien in kurzer Zeit auf und verlieren so schnell ihre typische "Knusprigkeit".

An dieser Stelle sei die GB 2 031 260 A genannt, die eine Nachtisch-Zubereitung aus einem Basis-Pulver und Cerealien beschreibt. Um beim Vermischen der Zubereitung mit Wasser oder einem Milchprodukt für einen gewissen. Zeitraum zu vermeiden, dass die Cerealien Feuchtigkeit aufnehmen und ihre Knusprigkeit zu schnell verlieren, werden die Cerealien mit einem Überzug versehen, der Schokolade umfasst. Der Überzug kann des Weiteren hoch-fettiges Karamell oder einen Konditorlack beinhalten. Unterhalb oder oberhalb der Schokoladenschicht kann ferner eine Schicht aus Zucker angeordnet werden.

Auch Partikel mit wasserlöslichen Bestandteilen wie insbesondere Zucker, oder mit quellfähigen Bestandteilen - beispielsweise Pflanzenteile, insbesondere getrocknete Fruchtstücke wie Rosinen oder Bananenenchips aber auch Nüsse und Nusssplitter - nehmen aus einem umgebenden wasserhaltigen Medium (und sogar aus der Umgebungsluft) Feuchtigkeit auf und sind daher nur unter engen Voraussetzungen zur Lagerung in einem wasserhaltigen Lebensmittel geeignet. Allgemein ist die gemeinsame Verwendung von Bestandteilen mit sehr unterschiedlichem Wassergehalt - beispielsweise Getreideextrudate mit 3 - 6 % Wassergehalt in Joghurt mit über 70 % Wassergehalt - nur in engen Grenzen möglich.

Aus der US 2002/0090421 A1 ist ein Lebensmittel in Form eines Stückes, bei dem es sich neben Cerealien auch um Fruchtstücke handeln kann, bekannt, das zunächst in zwei Schritten mit jeweils einer Schokoladenschicht umhüllt wird, um dann mit einer dritten Schicht aus groben Partikeln versehen zu werden, die dem Lebensmittel eine unebene Oberfläche verleihen. Die Schokoladenschichten sollen einen Feuchtigkeitsaustritt aus dem Lebensmittelstück an seine Umgebung verhindern, so dass eine gemeinsame Lagerung des Lebensmittels mit anderen Komponenten eines Cerealien-Mixes möglich ist.

Es ist allgemein bekannt, Wasser aufnehmende Partikel grundsätzlich trocken zu lagern, erst unmittelbar vor dem Verzehr in die wasserhaltige Zubereitung zu geben um den Übertritt von Wasser aus der Zubereitung in die Partikel so lange wie möglich zu vermeiden. In gleichfalls allgemein bekannten Verkaufsverpackungen für Lebensmittel mit solchen Partikeln werden die wasserhaltige Zubereitung und die Partikel in wasserdicht getrennten Kammern gelagert. Beispielsweise wird Puffreis zum Verzehr mit einer Puddingzubereitung in einem zusätzlich auf den Becher geclipten transparenten Deckel gelagert. Bekannt ist es auch, hoch zuckerhaltige Schokoladenpartikel in einem zweiten Becher zu lagern, der mit dem ersten verbunden ist und zum gemeinsamen Verzehr des Molkereiprodukts mit den Partikeln auf den ersten umgestülpt und so entleert wird.

Die US 2003/0148007 A1 offenbart beispielsweise ein schokoladenhaltiges Lebensmittel, das aus einem abwechselnd mit einer Fettschicht und mit einem kakaohaltigen Pulver beschichteten Partikel besteht, wobei das Lebensmittel leicht zu zerbeißen sein soll. Wahlweise kann das Partikel mit einer äußeren Schicht aus Zucker versehen und anderen Lebensmitteln wie beispielsweise Speiseeis oder Joghurt zugesetzt werden.

Die bekannten Verfahren bieten insbesondere keine Möglichkeit, Fruchtzubereitungen, die bekannter Weise als Zwischenprodukte für die Herstellung von Molkerei-Mischprodukten (z.B. Fruchtjoghurt) hergestellt werden, mit Partikeln zu versetzen, die aus ihrer Umgebung Flüssigkeit aufnehmen.

Das deutsche Gebrauchsmuster G 92 07 601 U1 beschreibt die Trennung einer Masse von hydrophilen, körnigen Partikeln von einem Milch-Frischprodukt, wobei diese Trennung durch ein zwischen diesen ausgebildete Fettschicht erreicht werden soll. In dem Gebrauchsmuster ist beschrieben, zumindest einzelne der Partikel auch innerhalb der Fettschicht einzulagern. Im Rahmen der Einlagerung eines Partikels in eine Fettschicht ist dieses zwar auch vollständig von Fett umgeben. Die Beweglichkeit einzelner Partikel relativ zueinander ist jedoch nach der Einlagerung ebenso wenig gegeben wie die Möglichkeit einer Dosierung der Partikel durch Schüttung. Durch die Anordnung der Partikel innerhalb einer Fettschicht ist auch vor dem Verzehr die Herstellung einer homogenen Mischung aus Partikeln und dem Milchprodukt kaum möglich.

Die DE 40 17 114 A1 offenbart das Aufsprühen einer geschlossenen Fettschicht auf ein Getreidekeimprodukt. Hierdurch soll der Verlust wesentlicher Inhaltsstoffe während der Lagerung vermindert und die Haltbarkeit der Getreidekeime verlängert werden. Es sollen dabei zum Hydrophobieren der Getreidekeime lagerstabile Fette und/oder Öle gesättigter Fettsäuren mit einem Schmelzpunkt unter 35°C verwendet werden, wobei z.B. Kakaobutter, Kokosfett oder Sonnenblumenweichfett wegen des dabei vermittelten angenehmen Mundgefühls als besonders geeignet beschrieben werden. Nachteilig ist bei der bekannten Vorgehensweise, dass die so behandelten Getreidekeimlinge geschmacklich nicht besonders attraktiv sind, da die verwendeten Fette abgesehen von dem vermeintlich angenehmen Mundgefühl zumindest kein positives geschmackliches Erlebnis hervorrufen.

Aus der EP 0 561 513 A1 ist ein Verfahren zur Herstellung eines Schokoriegels bekannt, der mit einer Cerealien enthaltenden Masse gefüllt ist. Zunächst werden die Cerealien mit einer ersten Schicht aus Schokolade und einer zweiten Schicht aus Fett umhüllt, wobei die Schicht aus Fett als Klebeschicht dienen soll, die die einzelnen Cerealien aneinander binden soll. Die Schmelztemperatur des Fetts soll unter der der Schokolade liegen, so dass das Fett während der Riegelherstellung auch bereits bei niedrigen Temperaturen weich bleibt, wohingegen die erste Schicht aus Schokolade zu diesem Zeitpunkt hart ist. Die die zusammenklebenden Cerealien enthaltende zähe Masse wird in "Gießformen" aus Schokolade gegeben und anschließend durch Wärmeeinwirkung mit der Gießform zu einem insgesamt kompakten Riegel verschmolzen.

Aus der US 4,310,560 ist ein Verfahren zur Herstellung von Partikeln aus einem Getreideextrudat bekannt. Die nach dem bekannten Verfahren hergestellten Partikel sollen beispielsweise in einem wasserhaltigen Lebensmittel, z.B. einem Dessert, verwendet werden. Zur Abschirmung der Partikel gegenüber dem Einfluss des Wassers wird deren poröse äußere Oberfläche mit einer Beschichtung aus einem essbaren, unter Normalbedingungen festen Fett versehen. Hierdurch sollen die Partikel in einem wässrigen Medium ihre Knusprigkeit für einen Zeitraum von mindestens 60 Minuten beibehalten. Aufgrund der porösen Oberfläche ist eine vollständige hermetische Abschirmung der Oberfläche der Partikel kaum möglich. Es müsse dann jedenfalls eine sehr große Menge des Fetts eingesetzt werden, die zu geschmacklichen Nachteilen der Partikel führt, da die Fette, insbesondere wenn sie in größerer Menge im Partikel vorhanden sind, durch einen nicht gerade angenehmen Geschmack in Erscheinung treten.

### Aufgabe

Der Erfindung liegt die Aufgabe zugrunde, die Anforderungen an die Lagerung Wasser aufnehmender Partikel zu vermindern und dabei geschmacklich attraktive Partikel bereitzustellen.

### Lösung

Nach der Erfindung wird vorgeschlagen, dass im Rahmen eines erfindungsgemäßen Verfahrens das Partikel vor dem Einbringen in das Lebensmittel zunächst mit einer inneren Schicht aus Schokolade und anschließend mit einer äußern Schicht aus Fett umhüllt wird. Durch das Aufbringen einer geschlossenen, für Wasser undurchdringlichen äußeren Fetthülle ist nicht nur der Übertritt von Wasser aus einem wasserhaltigen Medium - insbesondere dem Lebensmittel - oder aus der Umgebungsluft in den Kern des Partikels wirksam vermieden, sondern auch das Eindringen von Wasser in die unterhalb der Fettschicht befindliche Schokoladenschicht. Der Zweischichtaufbau ermöglicht darüber hinaus ganz allgemein, den vor deren Aufbringen erzielten Zustand des Partikels - insbesondere beispielsweise die Knusprigkeit eines trockenen Partikels - unabhängig vom umgebenden Medium zu erhalten und dabei gleichzeitig die angenehmen geschmacklichen Eigenschaften der Schokolade zu bieten.

Umgekehrt verhindert die erfindungsgemäß aufgebrachte äußere Hülle auch den Übertritt von Bestandteilen des Partikels in das Lebensmittel. Beispielsweise werden Vitamine, Mineralstoffe (beispielsweise Eisen) und Ballaststoffe sowie Farbstoffe aus der Schokolade von dem wasserhaltigen Lebensmittel getrennt und unerwünschte Effekte (beispielsweise Förderung oxidativer Prozesse durch Eisen, etwa das Ranzigwerden von Milchfett oder das Verbräunen färbender Lebensmittel) wirksam vermieden.

Die Anforderungen an die Lagerung der erfindungsgemäß doppelt umhüllten Partikel sind durch diese Maßnahme signifikant vermindert. Insbesondere wird es so ermöglicht, die Partikel bereits in einer Verkaufsverpackung für den Endverbraucher unmittelbar in ein wasserhaltiges Lebensmittel einzumischen.

Unter Schokolade im Sinne dieser Anmeldung soll nicht nur die in der Kakaoverordnung definierte Lebensmittelzusammensetzung verstanden werden, sondern auch andere Mischungen aus Kakaobestandteilen, Fetten und Zucker bzw. alternativen Süßungsmitteln. So können an Stelle von Kakaobutter auch andere äquivalente oder Ersatzfette (z.B. CBE = Cacao Butter Equivalent, CBS = Cacao Butter Substitute)eingesetzt werden, die allgemein bekannt sind. Ein großer Vorteil der erfindungsgemäßen äußeren Fettbeschichtung um die Schokoladenschicht liegt darin, dass dadurch auch die Verwendung einer Schokolade mit einem hohen Zuckeranteil möglich wird. Während bekannte Schokoladen, die für den Einsatz in wässrigen Medien bestimmt sind, einen sehr hohen Fettanteil und einen sehr geringen Zuckeranteil besitzen und daher geschmacklich eher bitter wirken und deshalb meist in einer diese bittere Geschmacksnote kompensierenden süßen Umgebung verwendet werden, kann das nach dem erfindungsgemäßen Verfahren hergestellte Partikel auch in Kombination mit einem säuerlichen, nur leicht oder gar nicht gesüßten Lebensmittel (z.B. Naturjoghurt)verwendet werden, da die Schokolade problemlos die für handelsübliche z.B. Milchschokolade typischen Rezepte mit einem vergleichsweise hohen Zuckergehalt aufweisen kann. Während normale Milchschokolade nicht in wässrigen Lebensmitteln lagerbar ist, da sehr schnell Quellungs- und Verfärbungseffekte eintreten, wird nach der erfindungsgemäßen Fettumhüllung eine solche Lagerung möglich.

Das Fett der äußeren Schicht ist bei Raumtemperatur (ca. 20°C bis 25°C) zumindest aber bei der Lagertemperatur (ca. 4°C bis 8°C) des Partikels bzw. des dieses enthaltenden Lebensmittels, z.B. Joghurt, fest.

In einer besonders bevorzugten Ausprägung des erfindungsgemäßen Verfahrens ist das Fett ein Pflanzenfett und weist einen Schmelzpunkt ähnlich wie Kakaobutter auf. Derartige Fette - beispielsweise bekannt als "CBE" ("cacao butter equivalent"), "CBR" ("-replacer") oder "CBS" ("- substitute") sind einerseits bei 20 bis 25 °C weich bis fließfähig und noch bei haushaltsüblichen Kühlschranktemperaturen leicht elastisch. Hartfette erfordern demgegenüber einerseits in der Verarbeitung höhere Temperaturen. Andererseits bilden sie unter Kühlschranktemperaturen sehr harte Strukturen und springen unter Belastung wie Glas. Die oben genannten, im Schmelzverhalten der Kakaobutter ähnlichen Fette sind dagegen in der Lage, ohne Beschädigung auch einer dünnen Schicht in gewissem Rahmen Ausdehnung und Schrumpfung der umhüllten Partikel auszugleichen. CBS-Fette auf Basis von Kokosfett sind gegenüber Palmfett-basierten CBR- oder CBE-Fetten einerseits aufgrund der besseren Sensorik, andererseits aus Kostengründen vorzuziehen.

Weiterhin wird vorzugsweise im Rahmen eines erfindungsgemäßen Verfahrens eine poröse Struktur des Partikels an seiner Oberfläche zunächst durch das Aufbringen der inneren Schicht aus Schokolade geglättet, bevor die äußere Schicht aus Fett aufgebracht wird. Neben der geschmacklichen Verbesserung des Partikels ermöglicht die Umhüllung mit Schokolade somit auch den Ausgleich von Unebenheiten in der Oberfläche der Partikel bis hin zum Füllen von offenen Poren, ohne die Dicke der Fettschicht zu steigern. Während eine Verwendung der inneren Schokoladenschicht in größerer Menge ohne jegliche geschmacklichen Nachteile möglich ist, trifft dies auf die äußere Fettschicht nicht zu, da das Fett in großen Mengen möglicherweise geschmacklich nachteilig in Erscheinung tritt. Zudem kann im Rahmen des erfindungsgemäßen Verfahrens eine weiche Schokolade - beispielsweise Zartbitterschokolade mit hohem Kakaobutteranteil oder Milchschokolade mit hohen Milchfettanteil - zum Einsatz kommen, die wiederum als thermo-elastische Schrumpfschicht einen Puffer zwischen unterschiedlichen Ausdehnungen und Schrumpfungen von Partikel und umgebender Fetthülle bildet.

Besonders vorteilhaft ist das erfindungsgemäße Verfahren zudem anwendbar, wenn das Lebensmittel ein Halbfabrikat ist, aus dem erst in weiteren Verarbeitungsschritten ein für den Endverbraucher bestimmtes Produkt hergestellt wird. Derartige Halbfabrikate sind insbesondere Zubereitungen, die in geringen Mengen Milchprodukten zur Einstellung spezieller sensorischer Eigenschaften zugegeben werden, beispielsweise Fruchtzubereitungen.

Die Erfindung wird weiterhin gebildet durch Partikel zum gemeinsamen Verzehr mit einem wasserhaltigen Lebensmittel mit einer auf der Oberfläche des unbeschichteten Partikels aufgebrachten geschlossenen inneren Schicht aus Schokolade und einer geschlossenen äußeren Schicht aus Fett, wie sie durch das zuvor beschriebene erfindungsgemäße Verfahren aufgebracht werden, sowie insbesondere durch Partikel, die zumindest an ihrer Oberfläche vor der Beschichtung eine poröse Struktur aufweisen. Die Anforderungen an die Lagerfähigkeit derartiger, insbesondere trockener erfindungsgemäßer Partikel ist gegenüber den bekannten Partikeln signifikant vermindert.

Die Anwendung des erfindungsgemäßen Verfahrens ermöglicht es insbesondere, eine Fruchtzubereitung, die zur Herstellung eines Molkerei-Mischprodukts einem Molkereiprodukt zum gemeinsamen Verzehr mit diesem zugesetzt wird, mit solchen Partikeln zu versetzen.

### Ausführungsbeispiel

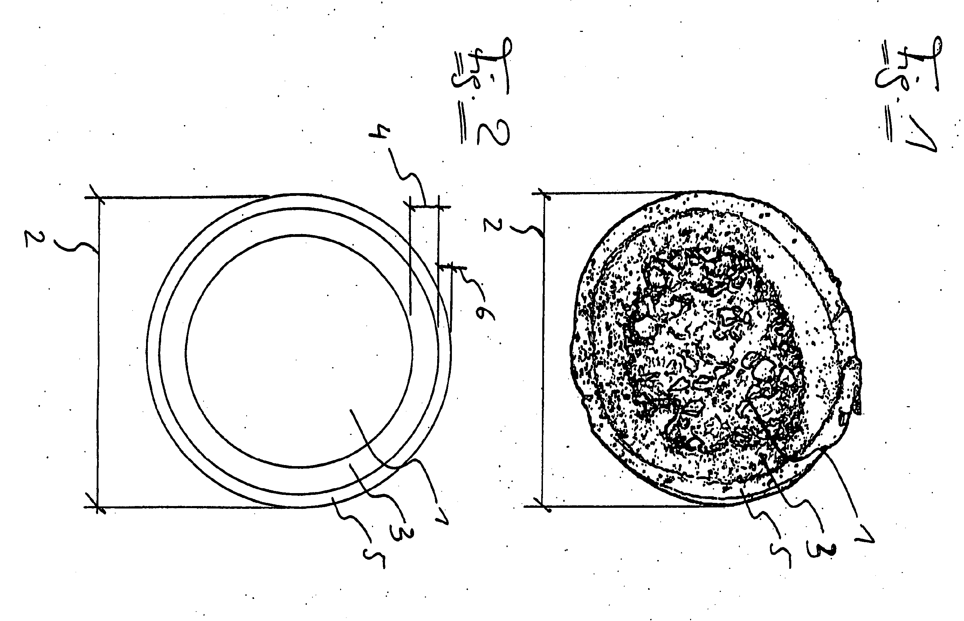

Die Erfindung wird nachfolgend anhand eines Ausführungsbeispiels erläutert. Es zeigen
- Fig. 1: einen Schnitt durch ein erfindungsgemäßes Partikel und
- Fig. 2: eine schematische Darstellung dieses Schnitts.

Das in den Zeichnungsfiguren gezeigte erfindungsgemäße Partikel 1 ist ein poröses, aber knuspriges, sandfarbenes, kugelförmiges Extrudat auf Getreidebasis, z.B. Weizen- und Reisbasis, ein so genannter "Weizen-Reis-Crisp" mit typisch getreidigem Geruch und leicht süßlichem Geschmack. Das Partikel 1 weist eine Durchmesser 2 von 3 mm bis 4 mm und ein Schüttgewicht von 265 g/l auf. Das Partikel 1 soll - um eine Haltbarkeit von mindestens 12 Monaten zu erzielen - nach der Spezifikation des Herstellers kühl, nämlich bei einer Lagertemperatur unterhalb 20° C, trocken, nämlich mit weniger als 65 % Luftfeuchte und lichtgeschützt gelagert werden. Die Oberfläche des Partikels ist porös und weist eine Vielzahl unregelmäßig geformter und unterschiedlich großer nach außen offener Hohlräume bzw. Kavernen auf.

Das Partikel 1 weist eine erste innere Schicht 3 aus Schokolade, nämlich einer so genannten "Zartbitterschokolade" mit einem Gehalt von etwa 45 % Zucker, 16 % Kakaopulver und 33 % Kakaobutter auf und mit einer Dicke 4 von etwa 0,35 mm auf, gemessen von der gedachten Hüllfläche der unregelmäßigen Oberfläche, d.h. die Tiefe von eventuell mit Schokolade ausgefüllten Hohlräumen bzw. Kavernen wird nicht mit gemessen. Die in flüssiger Form aufgebrachte Schokolade füllt oberflächig "angeschnittene" Hohlräume des Partikels 1 auf und glättet so dessen Oberfläche.

Das Partikel 1 weist außerhalb der Schicht 3 aus Schokolade eine geschlossene zweite äußere Schicht 5 aus Fett mit einer Dicke 6 von etwa 0,4 mm auf. Das Fett ist ein rein pflanzliches CBE-Fett mit dem Hauptbestandteil Palmfett. Der Festfettgehalt (SFC) beträgt etwa 70 % bei 20 °C und etwa 30 bis 40 % bei 30 °C, der Steigschmelzpunkt (mod. DGF-Methode C IV 3a, WRMA 4) liegt bei 33 bis 35 °C. Das Schmelzverhalten des Fettes und der genannten Alternativen ähnelt dem Schmelzverhalten von Kakaobutter.

Neben der rein sensorischen Funktion der Schokolade erfüllt die erste Schicht 3 noch weitere Funktionen: Die (gegenüber dem ursprünglichen Crisp) geglättete und geschlossene Oberfläche ermöglicht eine erheblich gleichmäßigere Beschichtung des Partikels 1 mit dem beim Beschichtungsvorgang flüssigen Fett und ermöglicht so eine Minimierung der Dicke 6 der zweiten Schicht 5 bis hin zu einem Wert, der das Fett im sensorischen Gesamteindruck gegenüber der Schokolade (oder einem anderen innen liegenden, sensorisch wirksamen Bestandteil) zurücktreten lässt. Darüber hinaus wirkt die Schokolade als elastische "Pufferzone" und gleicht unterschiedliche temperaturbedingte Ausdehnungen und Schrumpfungen von außen liegendem Fett und innen liegendem Partikel 1 aus.

Das erfindungsgemäße Partikel 1 wird mit einem Anteil von etwa 15 bis 25 % einer Zubereitung, beispielsweise mit den Geschmacksrichtungen Vanille, Schokolade, Stracciatella, Banane, Orange, Birne oder Müsli, zugesetzt, die in einem Verkaufsbehältnis mit einem Milchprodukt, beispielsweise Naturjoghurt, Quark oder einem Pudding zusammengebracht wird. Auch nach längerer Lagerzeit zeichnen sich die Partikel 1 trotz der wässrigen Umgebung noch durch ihre ursprüngliche Knusprigkeit aus, was im Vergleich mit den bisherigen Produkten mit getrennter Partikellagerung eine völlige Novität ist.

In den Zeichnungsfiguren sind
- 1: Partikel
- 2: Durchmesser
- 3: erste Schicht
- 4: Dicke
- 5: zweite Schicht
- 6: Dicke

## Patentansprüche

1. Verfahren zum Verhindern des Übertritts von Wasser aus einem wasserhaltigen Lebensmittel in ein Partikel (1), das zum gemeinsamen Verzehr mit dem Lebensmittel in das Lebensmittel eingebracht wird, wobei das Partikel (1) vor dem Einbringen in das Lebensmittel vollständig mit Fett beschichtet wird, ***dadurch gekennzeichnet, dass*** das Partikel (1) zunächst mit einer inneren Schicht (3) aus Schokolade und anschließend mit einer äußeren Schicht (5) aus Fett umhüllt wird.

2. Verfahren nach Anspruch 1, ***dadurch gekennzeichnet, dass*** das Fett ein Pflanzenfett ist und einen Schmelzpunkt ähnlich wie Kakaobutter aufweist.

3. Verfahren nach Anspruch 1, ***dadurch gekennzeichnet, dass*** eine zunächst poröse Struktur des Partikels (1) an seiner Oberfläche durch das Aufbringen der inneren Schicht (3) aus Schokolade geglättet wird, bevor die äußere Schicht (5) aus dem Fett aufgebracht wird.

4. Verfahren nach Anspruch 1, ***dadurch gekennzeichnet, dass*** das Lebensmittel ein Halbfabrikat ist.

5. Partikel (1) zum gemeinsamen Verzehr mit einem wasserhaltigen Lebensmittel, mit einer geschlossenen inneren Schicht (3) aus Schokolade und einer darauf aufgebrachten geschlossenen äußeren Schicht aus Fett (5), **dadurch gekennzeichnet, dass** das Fett ein Pflanzenfett ist und einen Schmelzpunkt ähnlich wie Kakaobutter aufweist.

6. Partikel (1) nach Anspruch 5, ***dadurch gekennzeichnet, dass*** das Partikel (1) vor Aufbringung der inneren Schicht (3) zumindest an seiner Oberfläche eine poröse Struktur aufweist.

7. Fruchtzubereitung zum gemeinsamen Verzehr mit einem Molkereiprodukt, ***dadurch gekennzeichnet, dass*** die Fruchtzubereitung mit Partikeln (1) Anspruch 5 oder 6 versetzt ist.

## Claims

1. A method for preventing the transfer of water from a food containing water into a particle (1), which is introduced into the food for joint consumption with the food, the particle (1) being completely coated with fat before the introduction into the food, ***characterized in that*** the particle (1) is first enveloped using an internal layer (3) made of chocolate and subsequently using an external layer (5) made of fat.

2. The method according to Claim 1, ***characterized in that*** the fat is a vegetable fat and has a melting point similar to cocoa butter.

3. The method according to Claim 1, ***characterized in that*** an initially porous structure of the particle (1) is smoothed on its surface by the application of the internal layer (3) made of chocolate, before the external layer (5) made of the fat is applied.

4. The method according to Claim 1, ***characterized in that*** the food is a semifinished product.

5. A particle (1) for joint consumption with a food containing water, having a closed internal layer (3) made of chocolate and a closed external layer made of fat (5) applied thereon, ***characterized in that*** the fat is a vegetable fat and has a melting point similar to cocoa butter.

6. The particle (1) according to Claim 5, ***characterized in that*** the particle (1) has a porous structure at least on its surface before application of the internal layer (3).

7. A fruit preparation for joint consumption with a dairy product, ***characterized in that*** the fruit preparation is admixed with particles (1) according to Claim 5 or 6.

## Revendications

1. Procédé pour empêcher la migration d'eau d'un produit alimentaire contenant de l'eau vers une particule (1) introduite dans le produit alimentaire afin d'être consommée en même temps que le produit alimentaire, laquelle particule (1) est entièrement enrobée de matière grasse avant d'être introduite dans le produit alimentaire, **caractérisé en ce que** la particule (1) est d'abord enveloppée d'une couche intérieure (3) de chocolat puis d'une couche extérieure (5) de matière grasse.

2. Procédé selon la revendication 1, **caractérisé en ce que** la matière grasse est une matière grasse végétale et a un point de fusion semblable à celui du beurre de cacao.

3. Procédé selon la revendication 1, **caractérisé en ce qu'**une structure initialement poreuse de la particule (1) est lissée en surface par l'application de la couche intérieure (3) de chocolat avant que la couche extérieure (5) faite de la matière grasse soit appliquée.

4. Procédé selon la revendication 1, **caractérisé en ce que** le produit alimentaire est un produit semi-fini.

5. Particule (1) destinée à être consommée en même temps qu'un produit alimentaire contenant de l'eau, avec une couche intérieure fermée (3) en chocolat et une couche extérieure fermée (5) en matière grasse appliquée par-dessus, **caractérisé en ce que** la matière grasse est une matière grasse végétale et a un point de fusion semblable à celui du beurre de cacao.

6. Particule (1) selon la revendication 5, **caractérisée en ce que** la particule (1) présente avant l'application de la couche intérieure (3) une structure poreuse au moins sur sa surface.

7. Préparation aux fruits destinée à être consommée en même temps qu'un produit laitier, **caractérisée en ce que** la préparation aux fruits est additionnée de particules (1) selon la revendication 5 ou 6.
